# EUROPÄISCHE PATENTSCHRIFT

(11) **EP 1 515 078 B1**
(45) Veröffentlichungstag und Bekanntmachung des Hinweises auf die Patenterteilung: **25.04.2007**
(21) Anmeldenummer: 04014483.4
(22) Anmeldetag: 21.06.2004
(51) Int. Cl.: F16P 3/14

(54) **Schutzeinrichtung für Maschinen, wie Abkantpressen, Schneidemaschinen, Stanzmaschinen oder dergleichen**
Protective device for machines such as bending presses, cutting machines, punching machines or the like.
Dispositif de protection pour machines telles que presses-plieuses, découpeuses,machines à estamper ou analogues.

(30) Priorität: 13.09.2003 DE 10342431
(43) Veröffentlichungstag der Anmeldung: 16.03.2005
(73) Patentinhaber: Fiessler Elektronik GmbH & Co. KG, 73734 Esslingen (DE)
(72) Erfinder: Fiessler, Lutz, Dr., 73773 Aichwald (DE)
(74) Vertreter: Vetter, Hans

(56) Entgegenhaltungen:
- EP-A- 0 146 460
- EP-B- 0 264 349
- WO-A-97/25568
- DE-A1- 10 123 562
- DE-A1- 10 232 795
- DE-A1- 19 717 299
- DE-B1- 2 750 234
- DE-U1- 20 217 426
- US-A- 4 652 205
- US-A1- 2002 104 958
- US-A1- 2003 062 469

## Beschreibung

Die Erfindung betrifft eine Schutzeinrichtung für Maschinen, wie Biegepressen, Schneidemaschinen, Stanzmaschinen oder dergleichen, bei denen ein erstes Maschinenteil Arbeitsbewegungen gegen ein zweites Maschinenteil ausführt, mit einer am ersten Maschinenteil mittels einer Halteeinrichtung angebrachten Lichtschrankenanordnung, insbesondere Laser-Lichtschrankenanordnung, die in einer Abstandsebene senkrecht zur Arbeitsbewegungsebene des ersten Maschinenteils eine erste Lichtschranke und wenigstens eine zweite Lichtschranke besitzt, deren Lichtstrahlen parallel zur Längsrichtung des ersten Maschinenteils verlaufen, und die Abstandsebene in einer einen Sicherheitsabstand zu diesem ersten Maschinenteil aufweist, wobei die erste Lichtschranke im Wesentlichen in der Arbeitsbewegungsebene oder -bahn des ersten Maschinenteils angeordnet ist, und mit einer bei Lichtstrahl-Unterbrechung die Arbeitsbewegung stoppenden Blockiereinrichtung.

Derartige Schutzeinrichtungen sind beispielsweise aus der DE 2750234 B1, der DE 19717299 A1, der WO 97/25568, der EP 0264349 B1, der EP 0146460 A2 oder der DE 10232795 A1 bekannt und dienen dazu, in erster Linie die Bedienungsperson zu schützen und zu verhindern, dass beispielsweise die Hand zwischen den beiden Maschinenteilen bzw. Werkzeugen eingeklemmt oder verletzt wird. Selbstverständlich kann die Lichtschrankenanordnung auch verhindern, dass durch das sich bewegende erste Maschinenteil unabsichtlich zwischen ihm und dem zweiten Maschinenteil gelangte Gegenstände beschädigt oder zerstört werden, wobei auch eine Selbstzerstörung oder -beschädigung verhindert wird. Ohne zusätzliche Maßnahmen würde am Ende der Schließbewegung das erste Maschinenteil kurz vor Erreichen des zu bearbeitenden Werkstücks zum Stehen kommen, da der unterste Laserstrahl unterbrochen würde, wenn sich das erste Maschinenteil bis auf den Sicherheitsabstand dem Werkstück genähert hat. Um dies zu verhindern, wird bei den bekannten Schutzeinrichtungen die Lichtschrankenanordnung gegen Ende der Schließbewegung deaktiviert. Dies kann nur deshalb in Kauf genommen werden, da gleichzeitig von der gefährlichen Eilgeschwindigkeit auf eine ungefährlichere Schleichgeschwindigkeit umgeschaltet wird. Diese Schleichgeschwindigkeit führt jedoch in nachteiliger Weise zu einer Reduzierung des Arbeitstaktes und damit zu einer Verlangsamung der Arbeitsvorgänge. Eine gattungsgemäße Schutzeinrichtung ist aus DE 202 17 426 U bekannt.

Es ist daher die Aufgabe der Erfindung, die Arbeitsphase mit verlangsamter Geschwindigkeit möglichst kurz zu halten, bei der Bearbeitung von kastenförmigen und flachen Werkstücken.

Diese Aufgabe wird erfindungsgemäß durch eine Schutzeinrichtung mit den Merkmalen des Anspruchs 1 gelöst.

Durch die erfindungsgemäße Umschalteinrichtung kann für jede Werkstückart die Schleichgeschwindigkeitsphase so kurz wie möglich gehalten werden. Bei flachen Werkstücken sind nur die Lichtschranken in der Abstandsebene aktiviert, die einen Sicherheitsabstand zum ersten Maschinenteil aufweisen. Dieser Sicherheitsabstand entspricht dem Bremswert des ersten Maschinenteils oder ist geringfügig größer. Die wenigstens eine zweite Lichtschranke, die in der Abstandsebene dem ersten Maschinenteil vorgelagert ist, verhindert, dass eine zwischen die Maschinenteile hineinrutschende Hand verletzt wird, indem diese zweite Lichtschranke durch die hineinrutschende Hand schon unterbrochen wird, bevor eine Unterbrechung der ersten Lichtschranke durch eine Fingerspitze erfolgt. Diese wenigstens eine zweite Lichtschranke in der Abstandsebene muss jedoch zwingend bei der Bearbeitung von kastenförmigen Werkstücken deaktiviert werden, da sonst keine Bearbeitung möglich wäre. Gleichzeitig mit diese Deaktivierung wird jedoch die wenigstens eine dritte Lichtschranke aktiviert, die in der Arbeitsbewegungsbahn des ersten Maschinenteils angeordnet ist, also bei einem als Oberwerkzeug ausgebildeten ersten Maschinenteil unterhalb der Abstandsebene. Diese dritte Lichtschranke übernimmt dadurch quasi die Sicherheitsfunktion der zweiten Lichtschranke bei der Bearbeitung von kastenförmigen Werkstücken, verhindert also das Einklemmen einer im letzten Moment hineinrutschenden Hand. Die automatische Umschaltung in die Schleichgeschwindigkeit erfolgt zwar hier früher, nämlich dann, wenn die dritte Lichtschranke das Werkstück erreicht, jedoch kann durch die Umschaltung die Deaktivierung dieser dritten Lichtschranke bei flachen Werkstücken erreicht werden, da zumindest dann wieder die Schleichphase minimiert wird.

Durch die in den Unteransprüchen aufgeführten Maßnahmen sind vorteilhafte Weiterbildungen und Verbesserungen der im Anspruch 1 angegebenen Schutzeinrichtung möglich.

Durch die Deaktivierungsvorrichtung zur Deaktivierung der Mehrzahl von dritten Lichtschranken nacheinander und schließlich der ersten Lichtschranke jeweils vor einer Unterbrechung durch das zu bearbeitende Werkstück oder durch das zweite Maschinenteil wird eine weitere Sicherheitsverbesserung erreicht. Durch die schrittweise Deaktivierung kann sogar noch ein während der reduzierten Schließgeschwindigkeit einrutschender Finger oder eine einrutschende Hand erkannt werden.

Um eine dauernde Deaktivierung der Lichtschranken nach Erreichen des Werkstücks oder des zweiten Maschinenteils automatisch zu verhindern, sind in vorteilhafter Weise automatische Einschaltmittel zur Reaktivierung der Lichtschranken vorgesehen, die insbesondere durch die Öffnungsbewegung des ersten Maschinenteils oder durch Endschalter auslösbar sind. Der Sicherheitsabstand in der Arbeitsbewegungsrichtung zwischen dem ersten Maschinenteil und der ersten Lichtschranke sowie zwischen dieser und den dritten Lichtschranken und den dritten Lichtschranken untereinander wird zweckmäßigerweise kleiner als der Durchmesser des kleinsten zwischen den Maschinenteilen bewegbaren Körperteils einer Bedienungsperson gewählt, also insbesondere kleiner als der Durchmesser eines kleinen Fingers. Der Sicherheitsabstand wird also beispielsweise zwischen 6 und 14 mm eingestellt.

Zur Deaktivierung der wenigstens einen Lichtschrankenanordnung ist in einer vorteilhaften Ausgestaltung eine Kurvensteuerung mit Endschalter mit der Deaktivierungsvorrichtung verbunden. Alternativ hierzu kann zur Deaktivierung auch ein Wegmeßsystem vorgesehen sein. Vorzugsweise ist dabei dem Wegmeßsystem eine Lerneinrichtung zugeordnet, durch die die Deaktivierungspositionen durch Unterbrechung wenigstens der untersten Lichtschranke bei einem Lernhub einspeicherbar oder einstellbar sind. Schließlich besteht eine alternative Möglichkeit zur Deaktivierung auch darin, eine Zeitsteuereinrichtung mit der Deaktivierungsvorrichtung zu verbinden.

In einer vorteilhaften Ausgestaltung der Erfindung können die Lichtstrahlen der zweiten und/oder der dritten Lichtschranken jeweils ein Lichtband oder eine Lichtfläche bilden, das bzw. die jeweils durch ein Sensorarray, insbesondere einen Kamerachip detektiert werden kann. Es kann auch hier eine nacheinanderfolgende Deaktivierung von Schutzfeldbereichen, auch kontinuierlich, erfolgen.

Ausführungsbeispiele der Erfindung sind in der Zeichnung dargestellt und in der nachfolgenden Beschreibung näher erläutert. Es zeigen:
- Figur 1: eine Längsseitenansicht einer mit der erfindungsgemäßen Schutzeinrichtung versehenen Abkantpresse,
- Figur 2: eine Querseitenansicht der in Figur 1 dargestellten Abkantpresse in vereinfachter Darstellung bei deaktivierter dritter Lichtschranke und zwischen die Werkzeuge eintauchendem Finger,
- Figur 3: dieselbe Darstellung bei vollständig eingetauchtem Finger,
- Figur 4: die Anordnung gemäß Figur 2, jedoch mit deaktivierter zweiter Lichtschranke und Bearbeiten eines kastenförmigen Werkstücks,
- Figur 5: dieselbe Anordnung wie Figur 4, jedoch bei vollständig eingetauchtem Finger und
- Figur 6: eine Anordnung mit einer Mehrzahl von zweiten und dritten Lichtschranken, und
- Figur 7: eine alternative Anordnung mit einer Mehrzahl von zweiten und dritten Lichtschranken.

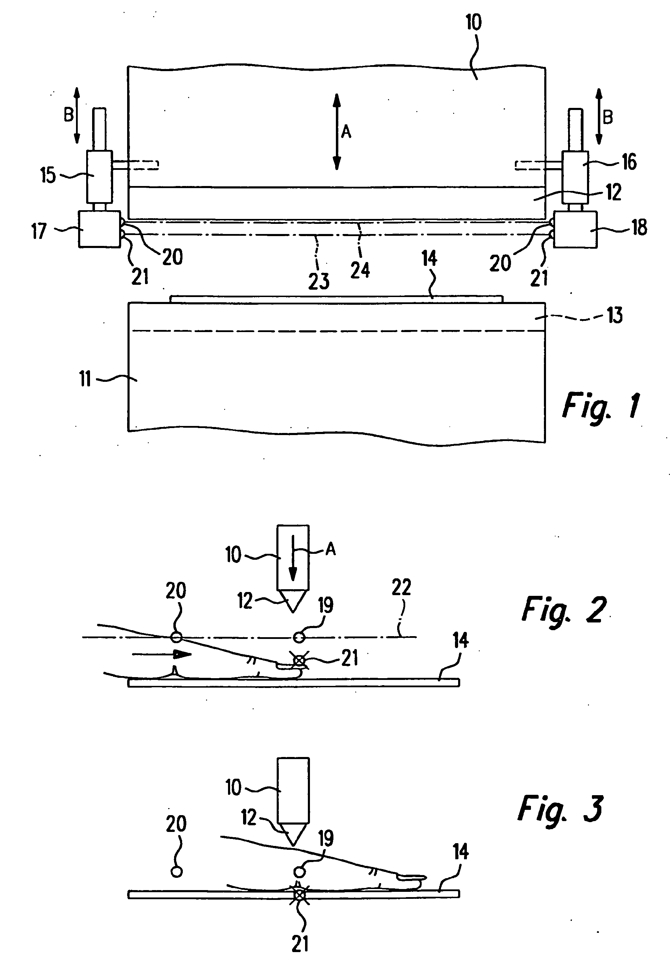

Die in den Figuren 1 und 2 dargestellte Abkantpresse besteht im Wesentlichen aus einem als Oberwerkzeug 10 ausgebildeten ersten Maschinenteil, das gegen ein feststehendes, als Unterwerkzeug 11 ausgebildetes zweites Maschinenteil bewegbar ist. Die gegensinnige Arbeitsbewegungsrichtung A ist mit einem Doppelpfeil gekennzeichnet. Selbstverständlich kann bei einer alternativen Ausführung auch das Oberwerkzeug feststehend und das Unterwerkzeug bewegbar ausgebildet sein. Das plattenartige, langgestreckte Oberwerkzeug 10 besitzt einen Arbeitsbereich 12 mit keilförmigem Querschnitt, während das Unterwerkzeug 11 eine entsprechende keilförmige Rinne 13 besitzt, in die der Arbeitsbereich 12 bei der Arbeitsbewegung eingreift und dadurch das auf dem Unterwerkzeug 11 liegende, zu bearbeitende Blech 14 biegt bzw. abkantet.

Die übrigen Bereiche der an sich bekannten Abkantpresse sind zur Vereinfachung nicht dargestellt. Die Querschnittsgestalt des Arbeitsbereichs 12 und der Rinne 13 kann selbstverständlich variieren.

Jeweils an den einander entgegengesetzten Schmalseiten des Oberwerkzeugs 10 sind Führungen 15, 16 am Oberwerkzeug 10 befestigt, beispielsweise angeschraubt. Die Befestigung kann selbstverständlich prinzipiell auch indirekt erfolgen, das heißt, die Führungen 15, 16 sind dann an einer Halterung befestigt, die über eine nicht dargestellte Halterung für das Oberwerkzeug 10 mit dieser verbunden ist.

In den Führungen 15, 16 sind Halterungen 17, 18 für drei Lichtschranken 19 - 21 in einer vertikalen Einstellbewegung bewegbar, deren Richtung durch Doppelpfeile B dargestellt ist und die der Arbeitsbewegungsrichtung A entspricht. Jede der Lichtschranken 19 - 21 besteht in an sich bekannter Weise aus einem Laser-Sender und einem Laser-Empfänger, wobei die Laser-Sender an der einen Halterung 17 und die Laser-Empfänger an der anderen Halterung 18 angeordnet sind. Es ist prinzipiell auch möglich, die Zahl der Sender dadurch zu reduzieren, dass der Sendestrahl des Senders durch einen Strahlteiler in mehrere Sendelichtstrahlen aufgeteilt wird. Weiterhin ist es auch möglich, den Sendestrahl parallel aufzuweiten. Weitere Möglichkeiten, die Zahl der Sender und die Zahl der Empfänger einzusparen, sind in der eingangs angegebenen DE 19717299 A1 beschrieben. Anstelle von Laser-Lichtstrahlen können selbstverständlich auch andere bekannte Arten von Lichtstrahlen verwendet werden.

Die erste Lichtschranke 19 und die zweite Lichtschranke 20 sind in einer Abstandsebene senkrecht zur Arbeitsbewegungsrichtung A angeordnet, die einen Sicherheitsabstand zum Oberwerkzeug 10 aufweist, der mindestens dem Bremsweg des Oberwerkzeugs 10 entspricht. Dabei ist die erste Lichtschranke 19 unterhalb des Oberwerkzeugs 10 in dessen Arbeitsbewegungsebene oder -bahn oder leicht versetzt zu dieser angeordnet, während die zweite Lichtschranke 20 zur Bedienungsperson hin um ca. 30 bis 50 mm vorversetzt ist. Die dritte Lichtschranke 21 ist unterhalb der ersten Lichtschranke 19 ebenfalls im Wesentlichen in der Arbeitsbewegungsebene bzw. -bahn des Oberwerkzeugs 10 angeordnet und ist also weiter vom Oberwerkzeug 10 entfernt gegenüber der ersten Lichtschranke 19. Der Abstand zwischen der ersten Lichtschranke 19 und der dritten Lichtschranke 21 entspricht im Wesentlichen der Differenz zwischen dem Durchmesser einer menschlichen Fingerspitze und dem Durchmesser des Teils des Fingers, der sich nach dem Anhalten der Schließbewegung in der Bearbeitungsebene befinden kann.

Die Schutzwirkung der beschriebenen Schutzeinrichtung besteht darin, dass die Schließbewegung zwischen Oberwerkzeug 10 und Unterwerkzeug 11 abrupt gestoppt wird, wenn einer der LaserStrahlen der Lichtschranke 19 - 21 unterbrochen wird, wenn also ein Gegenstand in die Bewegungsbahn gelangt. Da derartige Abkantpressen oder ähnliche Maschinen üblicherweise handbedient sind, besteht vor allem die Gefahr, dass die Hand oder der Arm einer Bedienungsperson in die Arbeitsbewegungsbahn gelangt, was zu einem Einklemmen oder Abtrennen durch die Schließbewegung führen könnte. Der Sicherheitsabstand zwischen dem Oberwerkzeug 10 und der Abstandsebene 22 sollte daher so bemessen sein, dass beispielsweise kein Finger dazwischengeschoben werden kann. Andererseits sollte dieser Sicherheitsabstand so groß sein, dass bei einer Unterbrechung eines Laserstrahls die Schließbewegung noch rechtzeitig vor dem Hindernis abgebremst bzw. gestoppt werden kann. Der Sicherheitsabstand wird daher beispielsweise zwischen 6 und 14 mm eingestellt.

Die Justierung der Lichtschrankenanordnungen bzw. der Halterungen 17, 18 am Oberwerkzeug durch Verschiebung in den Führungen 15, 16 kann beispielsweise gemäß der eingangs angegebenen DE 19717299 A1 erfolgen. Es kann auch eine automatisch positionierende Vorrichtung gemäß der DE 10123562 A1 vorgesehen sein. Bewegt sich das Oberwerkzeug 10 gegen das Unterwerkzeug 11, so werden am Ende der Schließbewegung die Lichtschranken durch das Werkstück 14 unterbrochen werden, was zu einem sofortigen Bewegungsstopp führen würde, so dass der gewünschte Arbeitsvorgang nicht ausgeführt werden könnte. Mit Hilfe einer Deaktivierungsvorrichtung wird dies verhindert, die beispielsweise in einer der Halterungen 17, 18 oder an einer sonstigen Stelle der Maschine untergebracht sein kann. Diese Deaktivierungsvorrichtung deaktiviert jeweils eine Lichtschranke mit Hilfe einer Schalteinrichtung kurz bevor eine Unterbrechung durch das Werkstück 14 oder durch das Unterwerkzeug 11 erfolgen würde. Gleichzeitig erfolgt eine Umschaltung von der bisherigen Arbeitsgeschwindigkeit in einen Schleichgang mit erheblich verringerter Geschwindigkeit aus Sicherheitsgründen. Bei der Rückwärtsbewegung des Oberwerkzeugs erfolgt dann eine Wiederreaktivierung der Lichtschranken, was prinzipiell auch in der oberen Endposition vor dem nächsten Arbeitsgang erfolgen könnte. Die Deaktivierungsvorrichtung kann in an sich bekannter Weise durch ein Wegmesssystem, eine Kurvensteuerung mit Endschaltern oder durch eine zeitsynchrone Steuerung erfolgen.

In den Figuren 2 und 3 ist der Fall der Bearbeitung eines flachen Werkstücks 14, beispielsweise eines Blechs dargestellt. Die Aktivierungsvorrichtung besitzt eine Umschalteinrichtung zur alternativen Deaktivierung der zweiten Lichtschranke 20 und der dritten Lichtschranke 21. Beim Biegen eines flachen Werkstücks gemäß den Figuren 2 und 3 ist die dritte Lichtschranke 21 deaktiviert, was durch eine durchgestrichene Darstellung symbolisiert ist. Aktiv sind somit lediglich die Lichtschranken 19 und 20. Sofern keine irreguläre Unterbrechung einer der Lichtschranken 19, 20 erfolgt, wird die Umschaltung auf den Schleichgang erst dann vorgenommen, wenn die Lichtschranke 19, 20, also die Abstandsebene 22 das Werkstück 14 erreicht. Nur noch während dieser kurzen Strecke, die mindestens dem Bremsweg des Oberwerkzeugs 10 entspricht, muss dieses im Schleichgang bewegt werden. Ein Finger kann bei diesem geringen Abstand nicht mehr zwischen Oberwerkzeug 10 und Werkstück 14 geschoben werden.

Die zweite Lichtschranke 20 dient zur Erhöhung der Sicherheit. Ohne diese zweite Lichtschranke 20 könnte der Fall eintreten, dass durch eine schnelle Handbewegung kurz vor dem Übergang in den Schleichgang die Arbeitsbewegung zwar durch Unterbrechung der ersten Lichtschranke 19 gestoppt wird, jedoch könnte durch eine schnelle Handbewegung die Hand während der Bremsphase noch soweit eingeschoben werden, dass sie im Bereich ihrer größeren Höhe noch eingequetscht würde. Dies verhindert die zweite Lichtschranke 20, die gemäß Figur 2 durch Unterbrechung aufgrund der schnell eingeschobenen Hand den Bremsvorgang bereits einleitet, bevor die erste Lichtschranke 19 unterbrochen wird. Auch bei weit eingeschobenem Finger gemäß Figur 3 kommt dadurch das Oberwerkzeug 10 noch rechtzeitig zum Stillstand.

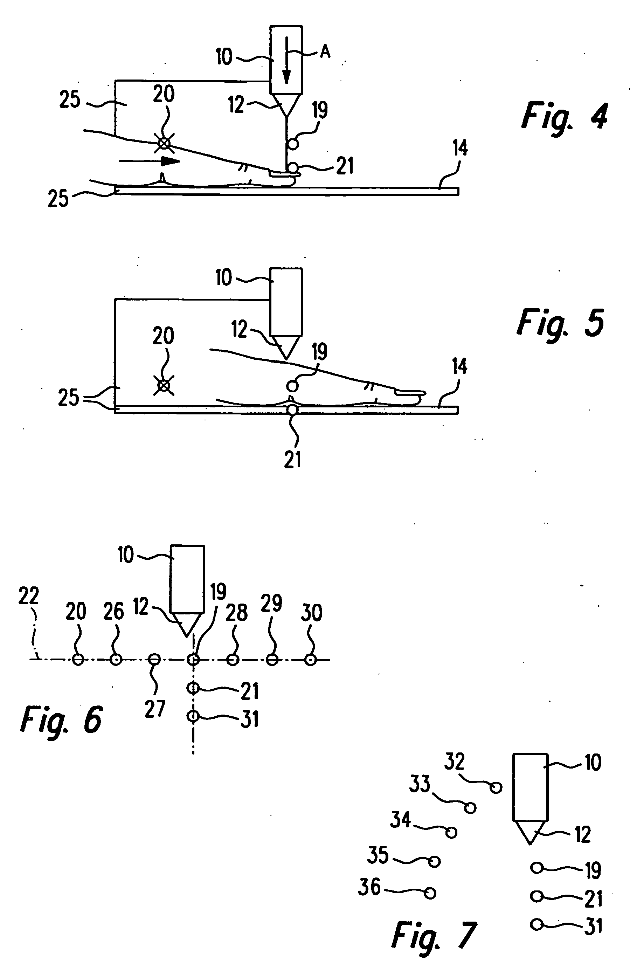

Wenn ein kastenförmiges Werkstück 25 gemäß den Figuren 4 und 5 gebogen, geschnitten oder gestanzt werden soll oder bei entsprechend angeordneten Werkstückanschlägen oder Halterungen kann die vorgelagerte Lichtschranke 20 die Bearbeitung unmöglich machen. In diesem Falle wird die Umschalteinrichtung der Deaktivierungsvorrichtung betätigt, mit der Wirkung, dass nach der Umschaltung die Lichtschranke 20 deaktiviert und dafür die Lichtschranke 21 aktiviert ist. Die Lichtschranke 21 sorgt jetzt dafür, dass die Schutzwirkung aufgrund des Wegfalls der Lichtschranke 20 nicht reduziert wird. Die jetzt nach unten vorgelagert Lichtschranke 21 erkennt als erstes die Fingerspitze und leitet per Unterbrechung den Bremsvorgang des Oberwerkzeugs 10 ein. Figur 5 zeigt, dass selbst bei schnell eingeschobenem Finger keine Gefahr mehr besteht, dass dieser eingeklemmt oder verletzt wird. Dabei muss allerdings in Kauf genommen werden, dass ein längerer Weg mit reduzierter Geschwindigkeit im Schleichgang zurückgelegt werden muss, da diese Langsamphase bereits beim Erreichen des Werkstücks 25 durch die Lichtschranke 21 einsetzt.

Eine weitere Sicherheitsverbesserung kann auch dadurch erreicht werden, dass lediglich die Lichtschranke 21 deaktiviert wird, kurz bevor sie das Werkstück 25 erreicht. Die Lichtschranke 19 bleibt weiterhin aktiviert, so dass auch bei reduzierter Schließgeschwindigkeit ein einrutschender Finger noch erkannt werden kann.

Das in Figur 6 dargestellte Ausführungsbeispiel zeigt, dass die Zahl der Lichtschranken in der Abstandsebene 22 noch vergrößert werden kann und zwar durch zusätzliche Lichtschranken 26, 27 vor und durch weitere Lichtschranken 28 bis 30 hinter der Bearbeitungsebene. Diese Vielzahl von Lichtschranken bewirkt, dass nicht mehr dazwischen hindurchgegriffen werden kann, so dass die Sicherheit erhöht wird. Selbstverständlich können mehrere solcher Lichtschranken auch beispielsweise nur vor der Bearbeitungsebene angeordnet sein. Die alternative Aktivierung der Lichtschranken betrifft selbstverständlich auch dieses Ausführungsbeispiel. So werden dort alternativ die Lichtschranken 20, 26 bis 30 einerseits und die Lichtschranken 21 und 31 jeweils alternativ aktiviert, je nach dem, ob ein flaches Werkstück 14 oder ein kastenförmiges Werkstück 25 vorliegt.

Auch die Zahl der Lichtschranken unterhalb des Oberwerkzeugs in der Arbeitsbewegungsebene oder -bahn kann ergänzt werden, im Ausführungsbeispiel um eine Lichtschranke 31. Wie bereits in den Figuren 4 und 5 erläutert, können die Lichtschranken 31, 21 jeweils nacheinander abgeschaltet werden, immer kurz bevor eine dieser Lichtschranken das Werkstück erreicht.

Bei dem in Figur 7 dargestellten weiteren Ausführungsbeispiel sind zweite Lichtschranken 32 bis 36 nicht mehr in einer gemeinsamen Abstandsebene 22 mit der ersten Lichtschranke 19, sondern in einer schräg gekrümmten Anordnung vor dem Oberwerkzeug 10 so angeordnet, dass diese Lichtschranken 32 bis 36 eine Barriere bilden, die ein Hindurchgreifen mit der Hand zum Arbeitsbereich unterhalb des Oberwerkzeugs 10 ohne Unterbrechung einer dieser Lichtschranken unmöglich macht bzw. verhindert. Dabei kann die Anordnung und Zahl dieser zweiten Lichtschranken 32 bis 36 auch variieren. Es sind Anordnungen in einer schrägen Linie, in einem Winkel oder in sonstigen Formationen möglich, die die beschriebene Barriere bilden. Durch die Umschalteinrichtung werden jeweils entweder die zweiten Lichtschranken 32 bis 36 einerseits oder die dritten Lichtschranken 21, 31 zusammem mit der ersten Lichtschranke 19 andererseits alternativ aktiviert.

Alternativ oder zusätzlich hierzu können auch zweite Lichtschranken an der gegenüberliegenden Seite des Oberwerkzeugs 10 entsprechend angeordnet sein. Die zu den anderen Ausführungsbeispielen beschriebenen Ausbildungen und Ausgestaltungen sind selbstverständlich auch bei diesem Ausführungsbeispiel realisierbar.

Alternativ zu mehreren in Reihen angeordnete Lichtschranken könnten diese auch durch Lichtbänder oder Lichtflächen ersetzt werden, welche mittels Sensorarrays, zum Beispiel Kamerachips erfasst werden können. So könnten beispielsweise gemäß den Figuren 6 und 7 die Lichtschranken 19, 21 und 31 durch ein Lichtband und die in der Abstandsebene 22 angeordneten Lichtschranken bzw. die Lichtschranken 32 bis 36 durch ein zweites Lichtband oder eine Lichtfläche ersetzt werden, wobei diese Lichtbänder alternativ mittels der Umschalteinrichtung der Deaktivierungsvorrichtung aktiviert bzw. deaktiviert werden können.

## Patentansprüche

1. Schutzeinrichtung für Maschinen, wie Biegepressen, Schneidemaschinen, Stanzmaschinen oder dergleichen, bei denen ein erstes Maschinenteil Arbeitsbewegungen gegen ein zweites Maschinenteil ausführt, mit einer am ersten Maschinenteil mittels einer Halteeinrichtung anbringbaren Lichtschrankenanordnung, insbesondere Laser-Lichtschrankenanordnung, die in einer Abstandsebene senkrecht zur Arbeitsbewegungsrichtung des ersten Maschinenteils eine erste Lichtschranke und wenigstens eine zweite Lichtschranke besitzt, deren Lichtstrahlen parallel zur Längsrichtung des ersten Maschinenteils verlaufen und die Abstandsebene einen Sicherheitsabstand zu diesem ersten Maschinenteil aufweist, wobei die erste Lichtschranke im Wesentlichen in der Arbeitsbewegungsebene oder - bahn des ersten Maschinenteils anordenbar ist, und mit einer bei Lichtstrahl-Unterbrechung die Arbeitsbewegung stoppenden Blockiereinrichtung, wobei wenigstens eine dritte Lichtschranke (21, 31) in der Arbeitsbewegungsbahn des ersten Maschinenteils (10) oder parallel dazu vorsehbar ist, die einen größeren Abstand als den Sicherheitsabstand zum ersten Maschinenteil (10) besitzt, **dadurch gekennzeichnet, dass** zur alternativen Deaktivierung der wenigstens einen zweiten Lichtschranke (20, 26 bis 30) einerseits und der wenigstens einen dritten Lichtschranke (21, 31) andererseits eine Umschalteinrichtung für eine Deaktivierungsvorrichtung vorgesehen ist, und dass die Deaktivierungsvorrichtung Mittel zur Deaktivierung jeweils wenigstens einer der Lichtschranken unmittelbar vor Unterbrechung des Lichtstrahls durch das Werkstück (14, 25) oder durch das zweite Maschinenteil (11) aufweist.

2. Schutzeinrichtung für Maschinen, wie Biegepressen, Schneidemaschinen, Stanzmaschinen oder dergleichen, bei denen ein erstes Maschinenteil Arbeitsbewegungen gegen ein zweites Maschinenteil ausführt, mit einer am ersten Maschinenteil mittels einer Halteeinrichtung anbringbaren Lichtschrankenanordnung, insbesondere Laser-Lichtschrankenanordnung, die in einem Sicherheitsabstand vom ersten Maschinenteil in dessen Arbeitsbewegungsrichtung eine erste Lichtschranke und seitlich dazu versetzt eine Vielzahl von zweiten Lichtschranken besitzt, deren Lichtstrahlen parallel zur Längsrichtung des ersten Maschinenteils verlaufen, wobei die erste Lichtschranke im Wesentlichen in der Arbeitsbewegungsebene oder -bahn des ersten Maschinenteils anordenbar ist, und mit einer bei Lichtstrahl-Unterbrechung die Arbeitsbewegung stoppenden Blockiereinrichtung, wobei wenigstens eine dritte Lichtschranke (21, 31) in der Arbeitsbewegungsbahn des ersten Maschinenteils (10) oder parallel dazu vorgesehen ist, die einen größeren Abstand als den Sicherheitsabstand zum ersten Maschinenteil (10) besitzt, wobei die zweiten Lichtschranken (32 bis 36) eine Barriere zu einem Bereich in der Arbeitsbewegungsrichtung (A) vor dem ersten Maschinenteil (10) bilden, die ein Hindurchgreifen in diesen Bereich ohne Unterbrechung einer Lichtschranke (32 bis 36) unmöglich macht, **dadurch gekennzeichnet, dass** zur alternativen Deaktivierung der zweiten Lichtschranken (32 bis 36) einerseits und der ersten (19) zusammen mit der wenigstens einen dritten Lichtschranke (21, 31) andererseits eine Umschalteinrichtung für eine Deaktivierungsvorrichtung vorgesehen ist, und dass die Deaktivierungsvorrichtung Mittel zur Deaktivierung jeweils wenigstens einer der Lichtschranken unmittelbar vor Unterbrechung des Lichtstrahls durch das Werkstück (14, 25) oder durch das zweite Maschinenteil (11) aufweist.

3. Schutzeinrichtung nach Anspruch 1 oder 2, **dadurch gekennzeichnet, dass** die Deaktivierungsvorrichtung zur Geschwindigkeitsreduzierung des ersten Maschinenteils (10) bei Deaktivierung wenigstens einer der Lichtschranken ausgebildet ist.

4. Schutzeinrichtung nach einem der vorhergehenden Ansprüche, **dadurch gekennzeichnet, dass** die Deaktivierungsvorrichtung zur Deaktivierung der zweiten (32 bis 36) und/oder der dritten Lichtschranken (21, 31) nacheinander und schließlich der ersten Lichtschranke (19) jeweils vor einer Unterbrechung durch das zu bearbeitende Werkstück (14; 25) oder durch das zweite Maschinenteil (11) ausgebildet ist.

5. Schutzeinrichtung nach einem der vorhergehenden Ansprüche, **dadurch gekennzeichnet, dass** das automatische Einschaltmittel zur Aktivierung der jeweils unmittelbar vor Erreichen des Werkstücks (14; 25) oder des zweiten Maschinenteils (11) deaktivierten Lichtschranken vorgesehen sind, die insbesondere durch die Öffnungsbewegung des ersten Maschinenteils (10) oder durch Endschalter auslösbar sind.

6. Schutzeinrichtung nach einem der vorhergehenden Ansprüche, **dadurch gekennzeichnet, dass** der Sicherheitsabstand in der Arbeitsbewegungsrichtung zwischen dem ersten Maschinenteil (10) und der ersten Lichtschranke (19) sowie zwischen dieser und der wenigstens einen dritten Lichtschranke (21, 31) und/oder zwischen mehreren dritten Lichtschranken untereinander kleiner als der Durchmesser des kleinsten zwischen den Maschinenteilen (10, 11) bewegbaren Körperteils einer Bedienungsperson ist, insbesondere eines Fingers.

7. Schutzeinrichtung nach einem der vorhergehenden Ansprüche, **dadurch gekennzeichnet, dass** zur Deaktivierung eine Kurvensteuerung mit Endschaltern mit der Deaktivierungsvorrichtung verbunden ist.

8. Schutzeinrichtung nach einem der Ansprüche 1 bis 6, **dadurch gekennzeichnet, dass** zur Deaktivierung ein Wegmesssystem mit der Deaktivierungsvorrichtung verbunden ist.

9. Schutzeinrichtung nach Anspruch 8, **dadurch gekennzeichnet, dass** dem Wegmesssystem eine Lernvorrichtung zugeordnet ist, durch die die Deaktivierungspositionen durch Unterbrechung wenigstens der untersten Lichtschranke bei einem Lernhub einspeicherbar oder einstellbar sind.

10. Schutzeinrichtung nach einem der Ansprüche 1 bis 7, **dadurch gekennzeichnet, dass** durch die Aktivierung eine Zeitsteuereinrichtung mit der Deaktivierungsvorrichtung verbunden ist.

11. Schutzeinrichtung nach einem der vorhergehenden Ansprüche, **dadurch gekennzeichnet, dass** die Lichtstrahlen der zweiten (20, 26 bis 30; 32 bis 36) und/oder der dritten Lichtschranken (21, 31) jeweils ein Lichtband oder eine Lichtfläche bilden oder als Lichtband oder Lichtfläche ausgebildet sind.

12. Schutzeinrichtung nach Anspruch 10, **dadurch gekennzeichnet, dass** zur Detektion des Lichtbands oder der Lichtfläche der zweiten (20, 26 bis 30) und/oder dritten Lichtschrankenanordnung (21, 31) jeweils ein Sensorarray, insbesondere ein Kamerachip vorgesehen ist.

## Claims

1. Guard for machines, such as bending presses, cutting machines, stamping machines or the like, wherein a first machine part performs operating movements against a second machine part, with a photoelectric barrier arrangement, in particular a laser barrier arrangement, suitable for mounting on the first machine part on a retaining device and comprising in a spacing plane at right angles to the operating movement of the first machine part a first photoelectric barrier and at least one second photoelectric barrier, the light beams of which run parallel to the longitudinal direction of the first machine part while the spacing plane has a safety clearance relative to the first machine part, wherein the first photoelectric barrier is substantially locatable in the plane or path of the operating movement of the first machine part, and with a blocking device stopping the operating movement at any interruption of the light beam, wherein at least one third photoelectric barrier (21, 31) can be provided in the or parallel to the path of the operating movement of the first machine part (10) at a distance from the first machine part (10) which is greater than the safety clearance, **characterised in that**, for alternatively deactivating the at least one second photoelectric barrier (20, 26 to 30) on the one hand and the at least one third photoelectric barrier (21, 31) on the other hand, there is provided a change-over device for a deactivating device, and **in that** the deactivating device comprises means for the deactivation of at least one of the photoelectric barriers immediately prior to the interruption of the light beam by the workpiece (14, 25) or by the second machine part (11).

2. Guard for machines, such as bending presses, cutting machines, stamping machines or the like, wherein a first machine part performs operating movements against a second machine part, with a photoelectric barrier arrangement, in particular a laser barrier arrangement, suitable for mounting on the first machine part on a retaining device and comprising, at a safety clearance from the first machine part and in the direction of its operating movement, a first photoelectric barrier and, laterally offset therefrom, a plurality of second photoelectric barriers with light beams running parallel to the longitudinal direction of the first machine part, wherein the first photoelectric barrier is substantially locatable in the plane or path of the operating movement of the first machine part, and with a blocking device stopping the operating movement at any interruption of the light beam, wherein at least one third photoelectric barrier (21, 31) can be provided in the or parallel to the path of the operating movement of the first machine part (10) at a distance from the first machine part (10) which is greater than the safety clearance, wherein the second photoelectric barriers (32 to 36) form a barrier against a region in the operating movement direction (A) in front of the first machine part (10), which makes any passage into this region impossible without the interruption of a photoelectric barrier (32 to 36), **characterised in that**, for alternatively deactivating the second photoelectric barrier (32 to 36) on the one hand and the first (19) together with the at least one third photoelectric barrier (21, 31) on the other hand, there is provided a change-over device for a deactivating device, and **in that** the deactivating device comprises means for the deactivation of at least one of the photoelectric barriers immediately prior to the interruption of the light beam by the workpiece (14, 25) or by the second machine part (11).

3. Guard according to claim 1 or 2, **characterised in that** the deactivating device is designed to reduce the speed of the first machine part (10) on deactivation of at least one of the photoelectric barriers.

4. Guard according to any of the preceding claims, **characterised in that** the deactivating device is designed for the successive deactivation of the second (32 to 36) and/or the third photoelectric barrier(s) (21, 31) and finally of the first photoelectric barrier (19) prior to the interruption of the light beam by the workpiece (14, 25) or by the second machine part (11).

5. Guard according to any of the preceding claims, **characterised in that** automatic switch-on means are provided for activating the photoelectric barriers deactivated immediately prior to reaching the workpiece (14, 25) or the second machine part (11), said switch-on means being in particular triggered by the opening movement of the first machine part (10) or by limit switches.

6. Guard according to any of the preceding claims, **characterised in that** the safety clearance in the operating movement direction between the first machine part (10) and the first photoelectric barrier (19) and between the latter and the at least one third photoelectric barrier (21, 31) and/or between a plurality of third photoelectric barriers is less than the diameter of the smallest body part, in particular of a finger, of an operator, which can be moved between the machine parts (10, 11).

7. Guard according to any of the preceding claims, **characterised in that** a cam control with limit switches is connected to the deactivating device for deactivation.

8. Guard according to any of claims 1 to 6, **characterised in that** a position sensing system is connected to the deactivating device for deactivation.

9. Guard according to claim 8, **characterised in that** a learning device is assigned to the position sensing system for storing or setting the deactivation positions by interrupting at least the lowest photoelectric barrier in a learning stroke.

10. Guard according to any of claims 1 to 7, **characterised in that** a timing device is connected to the deactivating device by activation.

11. Guard according to any of the preceding claims, **characterised in that** each of the light beams of the second (20, 26 to 30; 32 to 36) and/or the third photoelectric barriers (21, 31) forms or is designed as a light band or light area.

12. Guard according to claim 10, **characterised in that** a sensor array, in particular a camera chip, is provided for the detection of the light band or light area of the second (20, 26) and/or the third photoelectric barriers (21, 31) arrangement.

## Revendications

1. Dispositif de protection pour des machines, telles que des presses-plieuses, découpeuses, machines à estamper ou analogues, dans lesquelles une première pièce mécanique exécute des mouvements de travail contre une seconde pièce mécanique, avec un système de barrières photoélectriques, en particulier un système de barrières photoélectriques laser, pouvant être disposé sur la première pièce mécanique à l'aide d'un dispositif de fixation, lequel système possède une première barrière photoélectrique et au moins une seconde barrière photoélectrique sur un plan d'écartement perpendiculaire à la direction de mouvement de travail de la première pièce mécanique, dont les faisceaux lumineux se déplacent parallèlement à la direction longitudinale de la première pièce mécanique et le plan d'écartement comprend une distance de sécurité par rapport à la première pièce mécanique, la première barrière photoélectrique étant essentiellement disposée sur le plan ou la trajectoire du mouvement de travail de la première pièce mécanique, et étant pourvue d'un dispositif de blocage arrêtant le mouvement de travail en cas d'interruption de faisceau lumineux, au moins une troisième barrière photoélectrique (21, 31) étant prévue dans la trajectoire de mouvement de travail de la première pièce mécanique (10) ou parallèlement à celle-ci, laquelle présente une plus grande distance que la distance de sécurité par rapport à la première pièce mécanique (10), **caractérisée en ce qu'**un dispositif de commutation pour le dispositif de désactivation est prévu pour désactiver de manière alternative la au moins deuxième barrière photoélectrique (20, 26 à 30) d'une part et la au moins troisième barrière photoélectrique (21, 31) d'autre part, et **en ce que** le dispositif de désactivation comprend un moyen de désactiver respectivement au moins une des barrières photoélectriques immédiatement avant l'interruption du faisceau lumineux par la pièce (14, 25) ou par la seconde pièce mécanique (11).

2. Dispositif de protection pour des machines, telles que des presses-plieuses, découpeuses, machines à estamper ou analogues, dans lesquelles une première pièce mécanique exécute des mouvements de travail contre une seconde pièce mécanique, avec un système de barrières photoélectriques, en particulier un système de barrières photoélectriques laser, pouvant être disposé sur la première pièce mécanique à l'aide d'un dispositif de fixation, lequel système possède une première barrière photoélectrique et de manière décalée latéralement par rapport à celle-ci une pluralité de deuxièmes barrières photoélectriques à une distance de sécurité de la première pièce mécanique dans le sens du mouvement de travail de celle-ci, dont les faisceaux lumineux se déplacent parallèlement à la direction longitudinale de la première pièce mécanique, la première barrière photoélectrique étant essentiellement disposée sur le plan ou la trajectoire du mouvement de travail de la première pièce mécanique, et étant pourvue d'un dispositif de blocage arrêtant le mouvement de travail en cas d'interruption de faisceau lumineux, au moins une troisième barrière photoélectrique (21, 31) étant prévue dans la trajectoire de mouvement de travail de la première pièce mécanique (10) ou parallèlement à celle-ci qui présente une plus grande distance que la distance de sécurité par rapport à la première pièce mécanique (10), les deuxièmes barrières photoélectriques (32 à 36) formant une barrière par rapport à une zone dans la direction de mouvement de travail (A) avant la première pièce (10) qui rend impossible tout engagement transversal dans cette zone sans interruption d'une barrière photoélectrique (32 à 36), **caractérisée en ce qu'**un dispositif de commutation pour le dispositif de désactivation est prévu pour désactiver de manière alternative la deuxième barrière photoélectrique (32 à 36) d'une part et la première barrière (19) conjointement avec la au moins troisième barrière photoélectrique (21, 31) d'autre part, et **en ce que** le dispositif de désactivation comprend un moyen de désactiver respectivement au moins une des barrières photoélectriques immédiatement avant l'interruption du faisceau lumineux par la pièce (14, 25) ou par la seconde pièce mécanique (11).

3. Dispositif de protection selon la revendication 1 ou 2, **caractérisé en ce que** le dispositif de désactivation est conçu pour réduire la vitesse de la première pièce mécanique (10) en cas de désactivation d'au moins une des barrières photoélectriques.

4. Dispositif de protection selon l'une quelconque des revendications précédentes, **caractérisé en ce que** le dispositif de désactivation est conçu pour désactiver les deuxièmes (32 à 36) et/ou les troisièmes barrières photoélectriques (21, 31) successivement et enfin la première barrière photoélectrique (19) respectivement avant une interruption par la pièce à usiner (14 ; 25) ou par la deuxième pièce mécanique (11).

5. Dispositif de protection selon l'une quelconque des revendications précédentes, **caractérisé en ce que** l'élément de mise sous tension automatique servant à activer les barrières photoélectriques désactivées respectivement immédiatement avant d'atteindre la pièce (14 ; 25) ou la deuxième pièce mécanique (11), lesquelles barrières peuvent être déclenchées en particulier par le mouvement d'ouverture de la première pièce mécanique (10) ou par des commutateurs de fin de course.

6. Dispositif de protection selon l'une quelconque des revendications précédentes, **caractérisé en ce que**, entre la première pièce mécanique (10) et la première barrière photoélectrique (19) ainsi qu'entre celle-ci et la au moins une troisième barrière photoélectrique (21, 31) et/ou entre plusieurs troisièmes barrières photoélectriques entre elles, la distance de sécurité dans la direction du mouvement de travail est plus petite que le diamètre de la plus petite partie de corps de l'opérateur pouvant se déplacer entre les pièces mécaniques (10, 11), en particulier un doigt.

7. Dispositif de protection selon l'une quelconque des revendications précédentes, **caractérisé en ce que**, pour désactiver, un guide curviligne avec commutateurs de fin de course est relié au dispositif de désactivation.

8. Dispositif de protection selon l'une quelconque des revendications 1 à 6, **caractérisé en ce que**, pour désactiver, un système de mesure de position est relié au dispositif de désactivation.

9. Dispositif de protection selon la revendication 8, **caractérisé en ce qu'**un dispositif d'apprentissage est affecté au système de mesure de position, via lequel les positions de désactivation peuvent être réglées ou mémorisées par l'interruption d'au moins la barrière photoélectrique la plus basse lors de la course d'apprentissage.

10. Dispositif de protection selon l'une des revendications 1 à 7, **caractérisé en ce qu'**un dispositif de synchronisation est lié au dispositif de désactivation via l'activation.

11. Dispositif de protection selon l'une quelconque des revendications précédentes, **caractérisé en ce que** les faisceaux lumineux des deuxièmes (20, 26 à 30 ; 32 à 36) et/ou des troisièmes barrières photoélectriques (21, 31) forment respectivement une bande lumineuse ou une surface lumineuse ou sont conçues comme bande lumineuse ou surface lumineuse

12. Dispositif de protection selon la revendication 10, **caractérisé en ce qu'**il est prévu respectivement un ensemble de capteurs, en particulier une puce de caméra pour détecter la bande lumineuse ou la surface lumineuse des deuxièmes (20, 26 à 30) et/ou troisièmes barrières photoélectriques (21, 31).
